# EUROPEAN PATENT APPLICATION

(11) **EP 2 773 128 A2**
(43) Date of publication of application: **03.09.2014**
(21) Application number: 14154049.2
(22) Date of filing: 05.02.2014
(51) Int. Cl.: H04N 21/436

(54) **Content streaming between devices**

(30) Priority: 27.02.2013 US 201313778251
(71) Applicant: Google Inc., Mountain View, CA 94043 (US)
(72) Inventor: Patel, Rakesh, Mountain View, CA California 94043 (US); Cohen, Gabriel, Mountain View, CA California 94043 (US)
(74) Representative: Diehl & Partner GbR

(57) **Abstract**

Methods and systems for streaming content from a first device to a second device may include streaming content from the first device to the second device over a first connection. Next, it may be determined that the first device is connected to the second device by a second connection. As a result, content may be streamed from the first device to the second device over the second connection. Further, upon determination that the first device is connected to the second device by the second connection, the first connection between the first device and the second device may be disconnected. Further, streaming of the content is uninterrupted upon switching from the first connection to the second connection. Additionally, a mobile device for streaming content to a second device is also provided.

## Description

### BACKGROUND

Content may be streamed from one device to another over a variety of connections. For example, a portable device such as a smartphone or tablet may stream content such as a movie to a television over a physical connection, a wireless connection, or via an intermediary such as a dock or other connector. An intermediary device such as a dock also may connect to devices over different types of connections. For example, it may connect to the portable device over a wireless connection and a television, monitor, or the like over a physical connection, or it may connect to both devices over a physical connection or a wireless connection. In some cases, a user may select which connection should be used to stream content from one device to another. Alternatively or in addition, a device may be configured to automatically select the type of connection to use when streaming content.

### BRIEF SUMMARY

According to an implementation of the disclosed subject matter, a method for streaming content from a first device to a second device. Content may be streamed from the first device to the second device over a first connection. Next, it may be determined that the first device is connected to the second device by a second connection. As a result, content may be streamed from the first device to the second device over the second connection. Further, it may be determined that the first connection has been disconnected between the first device and the second device. The method further provides that streaming of the content is uninterrupted upon switching from the first connection to the second connection.

According to an implementation of the disclosed subject matter, a system may include a first device having a processor configured to stream content to the second device over a first connection. It may be determined that the second device is connected by a second connection, and the content may be streamed to the second device over the second connection. It may be determined that the first connection to the second device has been disconnected. Furthermore, the content stream may be uninterrupted upon switching from the first connection to the second connection.

According to an implementation of the disclosed subject matter, a mobile device may include a processor configured to stream content to a second device over a first connection. It may be determined that the second device is connected by a second connection, and the content may be streamed to the second device over the second connection. It may be determined that the first connection to the second device has been disconnected. Additionally, the content stream may be uninterrupted upon switching from the first connection to the second connection.

Additional features, advantages, and implementations of the disclosed subject matter may be set forth or apparent from consideration of the following detailed description, drawings, and claims. Moreover, it is to be understood that both the foregoing summary and the following detailed description are examples and are intended to provide further explanation without limiting the scope of the claims.

### BRIEF DESCRIPTION OF THE DRAWINGS

The accompanying drawings, which are included to provide a further understanding of the disclosed subject matter, are incorporated in and constitute a part of this specification. The drawings also illustrate implementations of the disclosed subject matter and together with the detailed description serve to explain the principles of implementations of the disclosed subject matter. No attempt is made to show structural details in more detail than may be necessary for a fundamental understanding of the disclosed subject matter and various ways in which it may be practiced.
FIG. 1 shows an example process according to an implementation of the disclosed subject matter.
FIG. 2 shows an example information flow according to an implementation of the disclosed subject matter.
FIG. 3 shows an example information flow according to an implementation of the disclosed subject matter.
FIG. 4 shows example configurations according to an implementation of the disclosed subject matter.
FIG. 5 shows a computer according to an implementation of the disclosed subject matter.
FIG. 6 shows a network configuration according to an implementation of the disclosed subject matter.

### DETAILED DESCRIPTION

Streaming of content from one device to another device can be interrupted by changes in the connection type between the devices. For example, a user may be wirelessly streaming content such as a movie, from his phone to a dock via a wireless connection protocol. The dock may be connected to a television via a physical connection, and as a result, the content may be displayed simultaneously on the television. While streaming, the phone battery may begin to run low. The user may place the phone on the dock for charging; however the user may have to manually disable the wireless streaming to the dock in order to switch to a physical connection for streaming to the television, such as physical connection provided by the dock. This manual switching from a wireless connection to a wired connection may interrupt the content stream, causing skips and/or pauses in the display of the content. Further, if the user's phone is docked and streaming content to the television via a wired connection and the user removes the phone from the dock, the wired connection may be disconnected and the content stream interrupted, requiring the user to manually switch to a wireless connection in order to resume streaming. Thus, it is difficult to maintain uninterrupted seamless streaming of content from one device to another device upon switching from one connection type to another connection type.

The user experience while streaming content may be improved if the streaming of content is maintained and uninterrupted when changing the connection type between two devices. In general, many devices are capable of streaming content to some other device, either by a wired or wireless connection. For example, such devices support various wired connection types such as HDMI, MHL, and the like, for streaming and/or receiving content via a physical connection. Typically, these devices also support various wireless connection types such as Wi-Fi, WAN, LAN, Bluetooth, DLNA, Miracast™, or similar wireless connection protocols, for streaming and/or receiving content via wireless connectivity. According to implementations disclosed herein, the user may be free to switch between various connection types (e.g., wired or wireless) while streaming content from one device to another device, without the need for active manual configuration of the connection while streaming, thereby automatically maintaining continuity of the content stream and enhancing the user's experience.

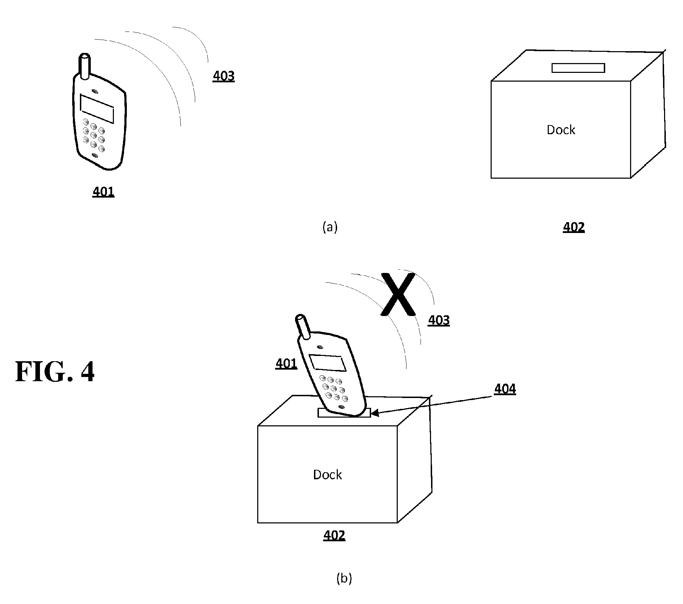

An implementation of the disclosed subject matter provides systems and methods for streaming content from one device to another device. For example, as shown in FIG. 4 (a), a user may wish to wirelessly stream content, e.g., a movie, from his mobile device 401 to his dock 402, and the dock 402 may be connected to his television by a physical connection, e.g., HDMI. The user may connect his mobile device 401 to the dock 402 by a wireless connection type 403. The movie may be streamed from the mobile device 401 to the dock 402 over the wireless connection 403. Because the dock 402 is connected to the television by HDMI, the movie may be displayed on the television. After some time, the mobile device 401 may be low on battery power and the user may wish to dock his mobile device 401 on the dock 402 in order to charge the mobile device 401. As shown in FIG. 4(b), upon docking the mobile device 401 on the dock 402, it may be determined that the mobile device 401 is connected to the dock 402 by a wired connection 404, e.g., by a pogo pin connector. Upon determining that the mobile device 401 is connected to the dock 402 by a wired connection 404, streaming of the movie from the mobile device 401 to the dock 402 may automatically switch to the pogo pin connection 404. As a result, streaming of the movie may be uninterrupted upon switching from the wireless connection 403 to the wired connection 404. Further, upon determining that the mobile device 401 is connected to the dock 402 by the wired connection 404, the wireless connection 403 may be automatically disconnected between the mobile device 401 and the dock 402.

As another example, as shown in FIG. 4(b), upon docking the mobile device 401 on the dock 402, it may be determined that the mobile device 401 is connected to the dock 402 by a wired connection 404. The mobile device 401 may determine that it is connected to the dock by reading an NFC tag, by identifying a change in state of a physical connection, based upon an explicit user indication, or any other suitable mechanism. Upon determining that the mobile device 401 is connected to the dock 402 by a wired connection 404, streaming of the movie from the mobile device 401 to the dock 402 may automatically switch to the wired connection 404. As a result, streaming of the movie may be uninterrupted and seamless upon switching from wireless connection 403 to the wired connection 404. Further, upon determining that the mobile device 401 is connected to the dock 402 by the wired connection 404, the wireless connection 403 may be automatically disconnected between the mobile device 401 and the dock 402.

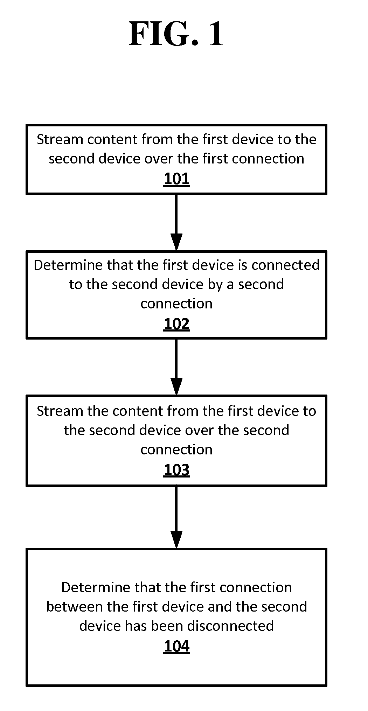

FIG. 1 shows an example process according to an implementation of the present disclosure. A method for streaming content from a first device to a second device may include streaming content from a first device to a second device over a first connection, at 101. Next, at 102, it may be determined that the first device is connected to the second device by a second connection. As a result, content may be streamed from the first device to the second device over the second connection, at 103. Further, it may be determined that the first connection between the first device and the second device has been disconnected, at 104. The method further provides that streaming of the content is uninterrupted upon switching from the first connection to the second connection. In an implementation, uninterrupted content playback may be achieved by preparing some or all of a necessary connection in advance of a time when the connection is required for playback. For example, if a device determines that a wireless connection to a display device is available but requires a network key to stream content, the device may request the user to input the network key prior to a time when the wireless connection is to be used by the device.

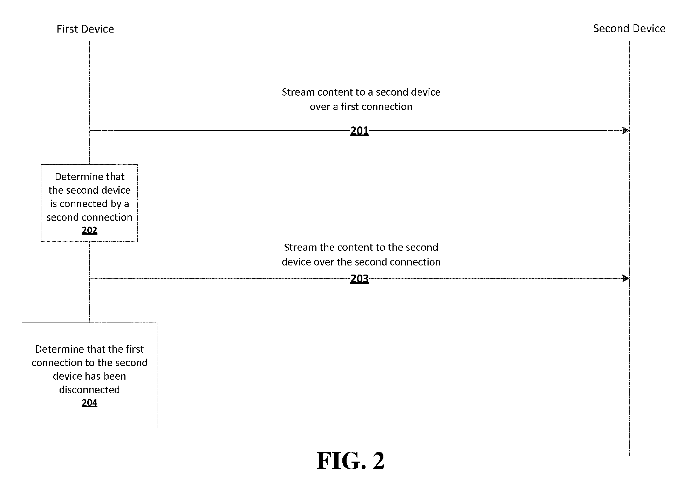

FIG. 2 shows an example information flow according to an implementation of the disclosed subject matter. A first device may stream content to a second device over a first connection, at 201. Next, the first device may determine that the second device is connected by a second connection, at 202. As a result, the first device may automatically stream content to the second device over the second connection, at 203. It may be determined that the first connection to the second device has been disconnected, at 204.

According to an implementation of the disclosed subject matter, systems and methods for streaming content from one device to another device are provided. For example, a user may wish to stream content, e.g., a slide show, from his mobile device to his television. The user may connect his mobile device to the television by a wired connection type, e.g., HDMI. The slide show may be streamed from the mobile device to the television over the HDMI connection. After some time, the user may wish to switch to a wireless connection type, e.g., Wi-Fi. The user may disconnect the HDMI connection between the mobile device and the television and, upon disconnecting the HDMI connection, the mobile device may automatically connect to the television by a Wi-Fi connection. Upon determining that the mobile device is connected to the television by Wi-Fi, the movie may be streamed from the mobile device to the television by Wi-Fi. As a result, streaming of the slide show may be uninterrupted upon switching from HDMI to Wi-Fi.

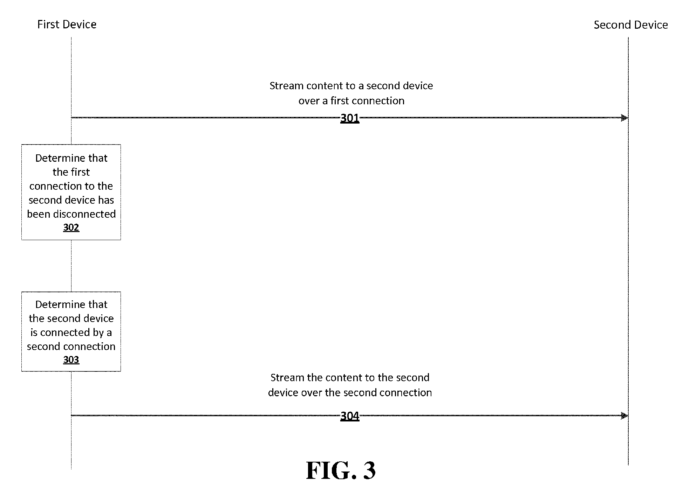

FIG. 3 shows an example information flow according to an implementation of the disclosed subject matter. A first device may stream content to a second device over a first connection at 301. At the first device, the first connection to the second device may be disconnected at 302. Next, it may be determined that the first device is connected to the second device by a second connection, at 303. As a result, the first device may stream the content to the second device over the second connection, at 304.

As discussed above, content may be a content-type selected from the group consisting of: audio, video, an image, a hologram, a three-dimensional video, a program, an application, and any other content that is capable of being streamed from one device to another device.

As used herein, uninterrupted streaming of content includes providing content seamlessly, without skipping or losing content frames and/or without requiring the content stream to be paused. More generally, uninterrupted streaming or playback includes playback without interruption that is noticeable by a human viewer. Additionally, content may be buffered to reduce or eliminate interruptions or other undesirable effects during streaming or playback that might otherwise occur when switching between connection-types.

A connection may be a connection-type including a wired or wireless connection. For example, a wired connection may include a physical wire such as HDMI, USB, A/V connector, and any other physical wire for connecting one device to another device. A wireless connection may include near field communications, Wi-Fi, Bluetooth, Internet, or other wireless connection protocol. In addition, a connection may also supply power and/or charge a device or battery.

Additionally, the first device and second device may connect by direct connection or indirect connection. In an implementation, the connection between two or more devices may be across one or more bridges between the interfaces. For example, the connection between the first device and the second device may be managed or assisted by a third device, such as a coordinating device, dock, local coordinator, remote server, third party service provider, satellite, network, remote entity, and the like. Disconnecting a connection between a first device and a second device may include disconnecting a wired connection, disabling a wireless connection, undocking a device from a dock, and the like.

A device may include a mobile device, a smartphone, a PDA, a handheld device, a handheld computer, a tablet, a laptop, a PC, a television, a media player, a display, a dock, and another other device that is capable of streaming/receiving content. In an implementation, the first device may be a smartphone and the second device may be a dock. Furthermore, implementations of the disclosed subject matter may include multiple devices.

According to an implementation of the disclosed subject matter, a mobile device is provided. The mobile device may include a processor configured to connect to a second device by a first connection. The mobile device may stream content to the second device over the first connection. Next, the mobile device may determine that the second device is connected by a second connection, and the mobile device may stream the content to the second device over the second connection. Upon the determination that the second device is connected by the second connection, the mobile device may disconnect the first connection to the second device. Further, the content stream may be uninterrupted upon switching from the first connection to the second connection.

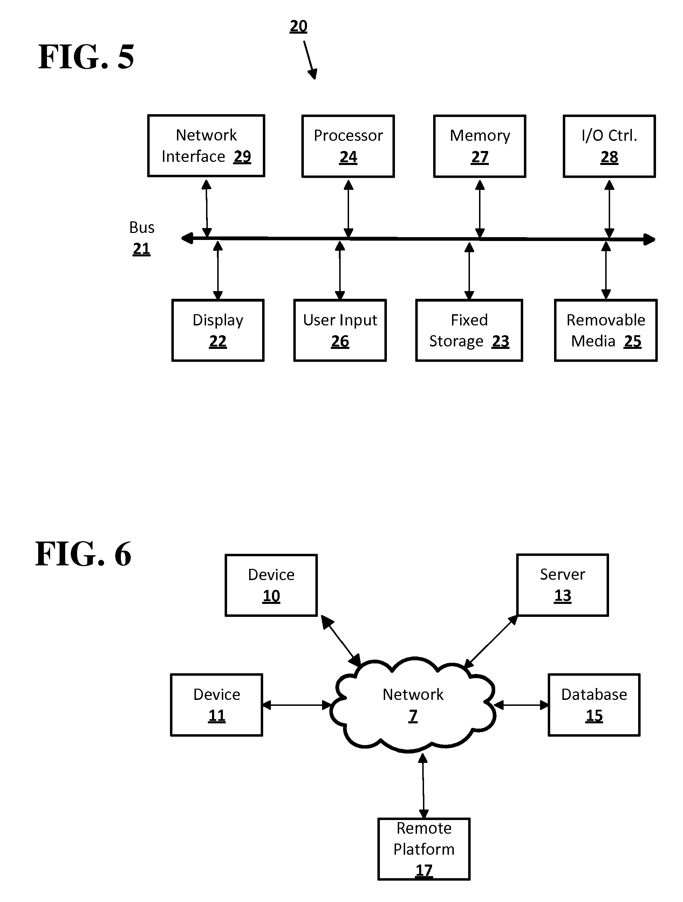

Implementations of the presently disclosed subject matter may be implemented in and used with a variety of component and network architectures. FIG. 5 is an example computer 20 suitable for implementing implementations of the presently disclosed subject matter. The computer 20 includes a bus 21 which interconnects major components of the computer 20, such as a central processor 24, a memory 27 (typically RAM, but which may also include ROM, flash RAM, or the like), an input/output controller 28, a user display 22, such as a display screen via a display adapter, a user input interface 26, which may include one or more controllers and associated user input devices such as a keyboard, mouse, and the like, and may be closely coupled to the I/O controller 28, fixed storage 23, such as a hard drive, flash storage, Fibre Channel network, SAN device, SCSI device, and the like, and a removable media component 25 operative to control and receive an optical disk, flash drive, and the like.

The bus 21 allows data communication between the central processor 24 and the memory 27, which may include read-only memory (ROM) or flash memory (neither shown), and random access memory (RAM) (not shown), as previously noted. The RAM is generally the main memory into which the operating system and application programs are loaded. The ROM or flash memory can contain, among other code, the Basic Input-Output system (BIOS) which controls basic hardware operation such as the interaction with peripheral components. Applications resident with the computer 20 are generally stored on and accessed via a computer readable medium, such as a hard disk drive (e.g., fixed storage 23), an optical drive, floppy disk, or other storage medium 25.

The fixed storage 23 may be integral with the computer 20 or may be separate and accessed through other interfaces. A network interface 29 may provide a direct connection to a remote server via a telephone link, to the Internet via an internet service provider (ISP), or a direct connection to a remote server via a direct network link to the Internet via a POP (point of presence) or other technique. The network interface 29 may provide such connection using wireless techniques, including digital cellular telephone connection, Cellular Digital Packet Data (CDPD) connection, digital satellite data connection or the like. For example, the network interface 29 may allow the computer to communicate with other computers via one or more local, wide-area, or other networks, as shown in FIG. 6.

Many other devices or components (not shown) may be connected in a similar manner (e.g., document scanners, digital cameras and so on). Conversely, all of the components shown in FIG. 5 need not be present to practice the present disclosure. For example, the display 22, user input 26, fixed storage 23, removable media 25, processor 24, memory 27, and/or I/O controller 28, may be omitted from a device as disclosed herein. The components can be interconnected in different ways from that shown. The operation of a computer such as that shown in FIG. 5 is readily known in the art and is not discussed in detail in this application. Code to implement the present disclosure can be stored in computer-readable storage media such as one or more of the memory 27, fixed storage 23, removable media 25, or on a remote storage location.

FIG. 6 shows an example network arrangement according to an implementation of the disclosed subject matter. One or more devices 10, 11, such as local computers, smart phones, tablet computing devices, and the like may connect to other devices via one or more networks 7. The network may be a local network, wide-area network, the Internet, or any other suitable communication network or networks, and may be implemented on any suitable platform including wired and/or wireless networks. The devices may communicate with one or more servers 13 and/or databases 15. The devices may be directly accessible by the devices 10, 11, or one or more other devices may provide intermediary access such as where a server 13 provides access to resources stored in a database 15. The devices 10, 11 also may access remote platforms 17 or services provided by remote platforms 17 such as cloud computing arrangements and services. The remote platform 17 may include one or more servers 13 and/or databases 15.

More generally, various implementations of the presently disclosed subject matter may include or be embodied in the form of computer-implemented processes and apparatuses for practicing those processes. Implementations also may be embodied in the form of a computer program product having computer program code containing instructions embodied in non-transitory and/or tangible media, such as floppy diskettes, CD-ROMs, hard drives, USB (universal serial bus) drives, or any other machine readable storage medium, wherein, when the computer program code is loaded into and executed by a computer, the computer becomes an apparatus for practicing implementations of the disclosed subject matter. Implementations also may be embodied in the form of computer program code, for example, whether stored in a storage medium, loaded into and/or executed by a computer, or transmitted over some transmission medium, such as over electrical wiring or cabling, through fiber optics, or via electromagnetic radiation, wherein when the computer program code is loaded into and executed by a computer, the computer becomes an apparatus for practicing implementations of the disclosed subject matter. When implemented on a general-purpose microprocessor, the computer program code segments configure the microprocessor to create specific logic circuits. In some configurations, a set of computer-readable instructions stored on a computer-readable storage medium may be implemented by a general-purpose processor, which may transform the general-purpose processor or a device containing the general-purpose processor into a special-purpose device configured to implement or carry out the instructions. Implementations may be implemented using hardware that may include a processor, such as a general purpose microprocessor and/or an Application Specific Integrated Circuit (ASIC) that embodies all or part of the techniques according to implementations of the disclosed subject matter in hardware and/or firmware. The processor may be coupled to memory, such as RAM, ROM, flash memory, a hard disk or any other device capable of storing electronic information. The memory may store instructions adapted to be executed by the processor to perform the techniques according to implementations of the disclosed subject matter.

The foregoing description, for purpose of explanation, has been described with reference to specific implementations. However, the illustrative discussions above are not intended to be exhaustive or to limit implementations of the disclosed subject matter to the precise forms disclosed. Many modifications and variations are possible in view of the above teachings. The implementations were chosen and described in order to explain the principles of implementations of the disclosed subject matter and their practical applications, to thereby enable others skilled in the art to utilize those implementations as well as various implementations with various modifications as may be suited to the particular use contemplated.

The subject matter of the following paragraphs forms part of the disclosure of the present document.

A method for streaming content from a first device to a second device, comprising: streaming content from the first device to the second device over a first connection; determining that the first device is connected to the second device by a second connection; streaming the content from the first device to the second device over the second connection; and determining that the first connection has been disconnected between the first device and the second device; wherein streaming of the content is uninterrupted upon switching from the first connection to the second connection.

The method of paragraph [35], wherein the step of determining that the first connection has been disconnected between the first device and the second device occurs prior to streaming content from the first device to the second device over the second connection.

The method of paragraph [35] or [36], wherein the steps of determining that the first device is connected to the second device by the second connection and streaming the content from the first device to the second device over the second connection occur subsequent to the step of determining that the first connection has been disconnected between the first device and the second device.

The method of one of paragraphs [35] to [37], wherein the content is a content-type selected from the group consisting of: audio, video, an image, a hologram, a three-dimensional video, a program, and an application.

The method of one of paragraphs [35] to [38], wherein each of the first connection and second connection are a connection-type independently selected from the group consisting of: a physical wire, near field communications, wireless, Wi-Fi, Bluetooth, Internet, or other wireless connection protocol.

The method of paragraph [39], wherein the first connection is wireless.

The method of paragraph [39] or [40], wherein the second connection is physical wire.

The method of paragraph [36] or [39], wherein the first connection is a physical wire.

The method of paragraph [36], [39] or [42], wherein the second connection is wireless.

The method of paragraph [41], wherein the second connection charges the first device.

The method of one of paragraphs [35] to [44], wherein each of the first device and the second device are independently selected from the group consisting of: a mobile device, a smartphone, a PDA, a handheld device, a handheld computer, a tablet, a laptop, a PC, a television, a media player, a display, and a dock.

The method of paragraph [45], wherein the first device is a smartphone.

The method of paragraph [45] or [46], wherein the second device is a dock.

A system, comprising: a first device having a processor configured to: stream content to a second device over a first connection; determine that the second device is connected by a second connection; stream the content to the second device over the second connection; and determine that the first connection to the second device has been disconnected; wherein the content stream is uninterrupted upon switching from the first connection to the second connection.

The system of paragraph [48], wherein the processor is configured to determine that the first connection to the second device has been disconnected before the content is streamed to the second device over the second connection.

The system of paragraph [48] or [49], wherein the processor is further configured to determine that the second device is connected by the second connection and stream the content to the second device over the second connection subsequent to determining that the first connection to the second device has been disconnected.

The system of one of paragraphs [48] to [50], wherein the content is a content-type selected from the group consisting of: audio, video, an image, a hologram, a three-dimensional video, a program, and an application.

The system of one of paragraphs [48] to [51], wherein each of the first connection and second connection are a connection-type independently selected from the group consisting of a physical wire, near field communications, wireless, Wi-Fi, Bluetooth, Internet, or other wireless connection protocol.

The system of one of paragraphs [48] to [52], wherein the second connection charges the first device.

The system of one of paragraphs [48] to [53], wherein each of the first device and the second device are independently selected from the group consisting of: a mobile device, a smartphone, a PDA, a handheld device, a handheld computer, a tablet, a laptop, a PC, a television, a media player, a display, and a dock.

The system of paragraph [54], wherein the first device is a smartphone.

The system of paragraph [54] or [55], wherein the second device is a dock.

The system of one of paragraphs [48] to [56], further comprising a second device.

A mobile device comprising: a processor configured to: stream content to a second device over a first connection; determine that the second device is connected by a second connection; stream the content to the second device over the second connection; and determine that the first connection to the second device has been disconnected; wherein the content stream is uninterrupted upon switching from the first connection to the second connection.

The mobile device of paragraph [58], wherein the processor is configured to determine that the first connection to the second device has been disconnected before the content is streamed to the second device over the second connection.

The mobile device of paragraph [58] or [59], wherein the processor is further configured to determine that the second device is connected by the second connection and stream the content to the second device over the second connection subsequent to determining that the first connection to the second device has been disconnected.

The mobile device of paragraph [58], [59] or [60], wherein the first connection to the device is disconnected before the content is streamed to the device over the second connection.

The mobile device of one of paragraphs [58] to [61], wherein the content is a content-type selected from the group consisting of: audio, video, an image, a hologram, a three-dimensional video, a program, and an application.

The mobile device of one of paragraphs [58] to [62], wherein each of the first connection and second connection are a connection-type independently selected from the group consisting of a physical wire, wireless, near field communications, Wi-Fi, Bluetooth, Internet, or other wireless connection protocol.

The mobile device of paragraph [63], wherein the first connection is wireless.

The mobile device of paragraph [63] or [64], wherein the second connection is a physical wire.

The mobile device of paragraph [63], wherein the first connection is a physical wire.

The mobile device of paragraph [63] or [66], wherein the second connection is wireless.

The mobile device of paragraph [65], wherein the second connection charges the first device.

The mobile device of one of paragraphs [58] to [68], wherein the second device is selected from the group consisting of: a mobile device, a smartphone, a PDA, a handheld device, a handheld computer, a tablet, a laptop, a PC, a television, a media player, a display, and a dock.

The mobile device of paragraph [69], wherein the second device is a dock.

## Claims

1. A method for streaming content from a first device to a second device, comprising:
streaming content from the first device to the second device over a first connection;
determining that the first device is connected to the second device by a second connection;
streaming the content from the first device to the second device over the second connection; and
determining that the first connection has been disconnected between the first device and the second device;
wherein streaming of the content is uninterrupted upon switching from the first connection to the second connection.

2. The method of claim 1, wherein the step of determining that the first connection has been disconnected between the first device and the second device occurs prior to streaming content from the first device to the second device over the second connection.

3. The method of claim 1 or 2, wherein the steps of determining that the first device is connected to the second device by the second connection and streaming the content from the first device to the second device over the second connection occur subsequent to the step of determining that the first connection has been disconnected between the first device and the second device.

4. The method of claim 1, 2 or 3, wherein the content is a content-type selected from the group consisting of: audio, video, an image, a hologram, a three-dimensional video, a program, and an application.

5. The method of one of claims 1 to 4, wherein each of the first connection and second connection are a connection-type independently selected from the group consisting of: a physical wire, near field communications, wireless, Wi-Fi, Bluetooth, Internet, or other wireless connection protocol.

6. The method of claim 5, wherein the first connection is wireless.

7. The method of claim 5 or 6, wherein the second connection is physical wire.

8. The method of claim 2 or 5,
wherein the first connection is a physical wire; and/or
wherein the second connection is wireless.

9. The method of claim 7, wherein the second connection charges the first device.

10. The method of one of claims 1 to 9, wherein each of the first device and the second device are independently selected from the group consisting of: a mobile device, a smartphone, a PDA, a handheld device, a handheld computer, a tablet, a laptop, a PC, a television, a media player, a display, and a dock.

11. The method of claim 10,
wherein the first device is a smartphone; and/or
wherein the second device is a dock.

12. A first device having a processor configured to:
stream content to a second device over a first connection;
determine that the second device is connected by a second connection;
stream the content to the second device over the second connection; and
determine that the first connection to the second device has been disconnected;
wherein the content stream is uninterrupted upon switching from the first connection to the second connection.

13. The first device of claim 12, wherein the processor is configured to determine that the first connection to the second device has been disconnected before the content is streamed to the second device over the second connection.

14. The first device of claim 12 or 13, wherein the processor is further configured to determine that the second device is connected by the second connection and stream the content to the second device over the second connection subsequent to determining that the first connection to the second device has been disconnected.

15. The first device of claim 12, 13 or 14, wherein the content is a content-type selected from the group consisting of: audio, video, an image, a hologram, a three-dimensional video, a program, and an application.

16. The first device of one of claims 12 to 15, wherein each of the first connection and second connection are a connection-type independently selected from the group consisting of a physical wire, near field communications, wireless, Wi-Fi, Bluetooth, Internet, or other wireless connection protocol.

17. The first device of one of claims 12 to 16, wherein the second connection charges the first device.

18. The first device of one of claims 12 to 17, wherein each of the first device and the second device are independently selected from the group consisting of: a mobile device, a smartphone, a PDA, a handheld device, a handheld computer, a tablet, a laptop, a PC, a television, a media player, a display, and a dock.

19. The first device of claim 18,
wherein the first device is a smartphone or mobile device; and/or
wherein the second device is a dock.

20. The first device of one of claims 12 to 19, wherein the first connection to the device is disconnected before the content is streamed to the device over the second connection.

21. The first device of claim 16, wherein the first connection is wireless.

22. The first device of claim 16 or 21, wherein the second connection is a physical wire.

23. The first device of claim 16, wherein the first connection is a physical wire; and/or
wherein the second connection is wireless.

24. The first device of claim 22, wherein the second connection charges the first device.

25. A system comprising the first device of one of claims 12 to 24 and further comprising a second device.
